# EUROPEAN PATENT SPECIFICATION

(11) **EP 3 138 229 B1**
(45) Date of publication and mention of the grant of the patent: **14.10.2020**
(21) Application number: 14730199.8
(22) Date of filing: 28.04.2014
(51) Int. Cl.: H04L 9/08, H04L 9/06

(54) **USING WEB ENTROPY TO SCRAMBLE MESSAGES**
VERWENDUNG VON ENTROPIE ZUR VERSCHLÜSSELUNG VON NACHRICHTEN
UTILISATION DE L'ENTROPIE DU WEB POUR EMBROUILLER DES MESSAGES

(43) Date of publication of application: 08.03.2017
(73) Proprietor: Telefonaktiebolaget LM Ericsson (publ), 164 83 Stockholm (SE)
(72) Inventor: POURZANDI, Makan, Montreal, Québec H4A 2L1 (CA); NÄSLUND, Mats, SE-168 36 Bromma (SE)
(74) Representative: Ericsson
(86) International application number: PCT/IB2014/061066
(87) International publication number: WO 2015/166300

(56) References cited:
- US-A1- 2009 077 383
- US-A1- 2014 068 244
- US-B1- 6 628 786
- SAMAN HEDAYATPOUR ET AL: "Hash functions-based random number generator with image data source", OPEN SYSTEMS (ICOS), 2011 IEEE CONFERENCE ON, IEEE, 25 September 2011 (2011-09-25), pages 69-73, XP032021235, DOI: 10.1109/ICOS.2011.6079248 ISBN: 978-1-61284-931-7

## Description

### FIELD

The present invention relates to electronic message security and in particular to using one or more webpages as the basis for performing electronic message scrambling and descrambling.

### BACKGROUND

The increased availability of electronic devices and access to the internet has spurred growth in the use of the internet. In turn, the use of electronic forms of communication have continued to expand in popularity. For example, the use of email communications via personal computers, laptops and mobile devices has become common place throughout the world in both workplace and personal environments.

However, the increased use of the internet to exchange messages has also lead to the increase in massive surveillance efforts by various entities, i.e., mass eavesdroppers (ME). Massive surveillance generally refers to surveillance of at least a portion of a population by one or more MEs typically at the request of a ruling party, agencies and the like, or on the MEs' own accord. Many of these MEs use network gateways to detect and store bypassing messages from any individual. Some examples include authoritarian governments using gateways to log exchanged emails in order to scan communications, looking for various forms of "suspect" activity. Thus, anyone is a potential target in mass eavesdropping efforts, not only predetermined individuals already known to these eavesdropping entities.

In order for individuals to counteract these massive eavesdropping efforts, message exchange between peers can be protected using encryption. Encryption can be very secure but if the messages are intercepted by an eavesdropper and the eavesdropper can retrieve the keys, all exchanged messages can be decrypted by the eavesdropper. Another form of encryption called deniable encryption uses various keys. The sender encrypts a sensitive message using the first key. Later, if the user is asked about the sensitive message, the user is able to disclose the second key which has the property that decryption provides an "innocent" message and not the sensitive message.

The paper titled "Hash Functions - Based Random Number Generator with Image Data Source" by Saman Hedayatpour et al. published in "2011 IEEE Conference on Open Systems" discloses that in modern cryptosystems, real random numbers play critical roles and that generating random numbers is challenging due to the need for special noisy sources as the source for the random number generator. The paper discloses a method to generate truly random values without any need for special noisy sources. To this end, hash functions are used in combining two data extractors to transform normal image data and make it suitable as the source of random number generator.

US 6,628,786 B1 discloses a system and method for generating random numbers utilizing a shared or distributed source of entropy. The disclosed technique allows networked computers to generate and share entropy in proportion to the need for random numbers utilized to initialize the internal state of random number generators residing on the computers. A shared session key generated during communications between a first and second computer is appended to the current internal state of the random number generators residing on the computers to create a bit string. The bit string is then mixed or hashed using a one-way "hash" function such as message digest function to produce a mixed bit string. At least a portion of the mixed bit string is then used to reinitialize the internal state of the random number generators residing on the computers. Since the initial state of the random number generators residing on the computers will be different, the values used to reinitialize the internal state of the generators will be different. In the case of a computer network, the internal state of each host computer's random number will thus ultimately be dependent upon on the internal state of every other computer that the host has communicated with and the order in which the communications took place.

US 2009/0077383 A1 discloses methods and systems for secure electronic data communication over public communication networks. A secure data communication component may be utilized to implement a communication protocol. New versions of the data communication component may be generated, with each version containing a different communication protocol. Source code of the data communication component may be modified using a polymorph engine to create a functionally-equivalent component having a different code structure. An anti-phishing component may intercept a link in an electronic communication activated by a user, analyze the link and the electronic communication, determine a phishing risk to the user posed by the link, and direct the user to a location indicated by the link or redirect the user to a valid location. A server authentication component may detect and prevent DNS attacks, injections, and defacing activities.

US 2014/0068244 A1 discloses an approach for enabling a web browser to decrypt and to display encrypted information based on entropy calculations of the information. The decryption manager determines at least one entropy value for at least one element of at least one webpage. The decryption manager causes, at least in part, a decryption of the at least one element to generate at least one decrypted element based, at least in part, on a comparison of the at least one entropy value against one or more entropy threshold values.

The problems with these existing encryption approaches is that when the messages are encrypted using symmetric or asymmetric keys, the eavesdropper can decrypt the message as soon as the keys are made available to the eavesdropper. Further, the use of an encrypted message may itself trigger "interest" by monitoring entities, thereby causing problems for individuals. Further, while deniable encryption improves the situation since the sender can reveal a "faked" or "innocent" message these systems require trusted third parties which may be hard to find.

### SUMMARY

The aforementioned problem is solved by the features of the independent claims. Further embodiments are the subject-matter of the dependent claims. The present invention advantageously provides an apparatus and method for scrambling and unscrambling data such as a message using one or more webpages. Specifically, the present invention provides an apparatus for scrambling a message, a method for scrambling a message, an apparatus for unscrambling a scrambled message, a method for unscrambling a scrambled message and a non-volatile computer-readable memory according to the independent claims. Developments are set forth in the dependent claims.

According to a further aspect of the present disclosure, an apparatus for scrambling a message is disclosed. The apparatus includes a processor and a memory in communication with the processor. The memory contains instructions executable by the processor that are configured to cause the apparatus to retrieve webpage data of at least one webpage, the at least one webpage being different from the message and perform a hash operation on the webpage data to generate hashed webpage data. The apparatus is further configured to generate at least one pseudo-random value based at least in part on the hashed webpage data and generate a scrambled message by performing a first logical operation on the generated at least one pseudo-random value and the message.

According to one implementation of this aspect, the webpage data includes at least one of text of the webpage and HyperText Markup Language, HTML, code of the webpage. The webpage data not including advertisement data associated with the at least one webpage. According to another implementation of this aspect, the message is recoverable from the scrambled message only if the same webpage data is retrieved from the at least one webpage. According to another implementation of this aspect, the at least one webpage is a plurality of webpages. The hashed webpage data is generated for each corresponding webpage. The memory further contains instructions executable by the processor that are configured to perform a second logical operation on the hashed webpage data of the plurality of webpages. The generation of that at least one pseudo-random value is based at least in part on an output of the second logical operation.

According to another implementation of this aspect, the second logical operation is an XOR operation. The hashed webpage data is XORed with one another. According to another implementation of this aspect, the second logical operation is a hash function that is performed using the hashed webpage data as an input. According to another implementation of this aspect, the first logical operation is an encryption function using the generated pseudo-random value as basis for a key. According to another implementation of this aspect, the memory further contains instructions executable by the processor that are configured to apply a steganography scheme to the scrambled message.

According to another aspect of the present disclosure, a method for scrambling a message is disclosed. Webpage data of at least one webpage is retrieved. A hash operation is performed on the webpage data to generate hashed webpage data. At least one pseudo-random value is generated based at least in part on the hashed webpage data. A scrambled message is generated by performing a first logical operation on the at least one pseudo-random value and the message. According to one implementation of this aspect, the webpage data includes at least one of text of the webpage and HyperText Markup Language, HTML, code of the webpage. The webpage does not include advertisement data associated with the at least one webpage. According to another implementation of this aspect, the message is recoverable from the scrambled message only if the same webpage data is retrieved from the at least one webpage.

According to another implementation of this aspect, the at least one webpage is a plurality of webpages. The hashed webpage data is generated for each corresponding webpage. A second logical operation is performed on the hashed webpage data of the plurality of webpages. The generation of the at least one pseudo-random value is based on an output of the second logical operation. According to another implementation of this aspect, the second logical operation is an XOR operation. The hashed webpage data is XORed with one another. According to another implementation of this aspect, the first logical operation is an encryption function using the generated pseudo-random value as basis for a key.

According to another implementation of this aspect, a steganography scheme is applied to the scrambled message. According to another implementation of this aspect, the first logical operation is an encryption function using the generated pseudo-random value as basis for a key.

According to another aspect of the present disclosure, an apparatus for unscrambling a scrambled message is provided. The scrambled message includes a message that was scrambled based at least in part on webpage data of at least one webpage retrieved. The apparatus includes a processor and a memory in communication with the processor. The memory contains instructions executable by the processor that are configured to cause the apparatus to receive the scrambled message, retrieve webpage data of the at least one webpage, perform a hash operation on the webpage data to generate hashed webpage data, generate at least one pseudo-random value based at least in part on the hashed webpage data, perform a first logical operation on the at least one pseudo-random value and the scrambled message, and recover the message from the scrambled message only if the retrieved webpage data of the at least one webpage is the same as the webpage data used to scramble the message.

According to one implementation of this aspect, the webpage data includes at least one of text of the webpage and HyperText Markup Language, HTML, code of the webpage. The webpage data does not include advertisement data associated with the at least one webpage. According to another implementation of this aspect, the at least one webpage is a plurality of webpages. The hashed webpage data is generated for each corresponding webpage. The memory further contains instructions executable by the processor that are configured to perform a second logical operation on the hashed webpage data of the plurality of webpages. The generation of the at least one pseudo-random value is based at least in part on the output of the second logical operation. According to another

implementation of this aspect, the second logical operation is an XOR operation. The hashed webpage data is XORed with one another. According to another implementation of this aspect, the first logical operation is a decryption function using the generated pseudo-random value as basis for a key. According to another implementation of this aspect, the memory further contains instructions executable by the processor that are configured to apply a steganography scheme to the scrambled message.

According to another aspect of the present disclosure, an apparatus for scrambling a message is provided. The apparatus includes a scrambling module configured to retrieve webpage data of at least one webpage, perform a hash operation on the webpage data to generate hashed webpage data, generate at least one pseudo-random value based at least in part on the hashed webpage data, and generate a scrambled message by performing a first logical operation on the at least one pseudo-random value and the message.

According to one implementation of this aspect, the scrambling module is further configured to apply a steganography scheme to the scrambled message. According to another implementation of this aspect, the webpage data includes at least one of text of the webpage and HyperText Markup Language, HTML, code of the webpage. The webpage data does not include advertisement data associated with the at least one webpage. According to another implementation of this aspect, the message is recoverable from the scrambled message only if the same webpage data is retrieved from the at least one webpage. According to another implementation of this aspect, the first logical operation is an encryption function using the generated pseudo-random value as basis for a key.

According to another implementation of this aspect, the at least one webpage is a plurality of webpages. The hashed webpage data is generated for each corresponding webpage. The memory further contains instructions executable by the processor that are configured to perform a second logical operation on the hashed webpage data of the plurality of webpages. The generation of the at least one pseudo-random value is based at least in part on an output of the second logical operation. According to another implementation of this aspect, the second logical operation is an XOR operation. The hashed webpage data is XORed with one another. According to another implementation of this aspect, the first logical operation is an encryption function using the generated pseudo-random value as basis for a key.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of an exemplary system for scrambling and unscrambling data in accordance with the principles of the invention;
FIG. 2 is a flow chart of an electronic message scrambling process for scrambling data in accordance with the principles of the present invention;
FIG. 3 is a detailed flow chart of the electronic message scrambling process in accordance with the principles of the present invention;
FIG. 4 is a flow chart of an electronic message unscrambling process for extracting scrambled data in accordance with the principles of the present invention;
FIG. 5 is a detailed flow chart of the electronic message unscrambling process in accordance with the principles of the present invention; and
FIG. 6 is a flow chart of an exemplary implementation of the electronic message scrambling of FIG. 2 in accordance with the principles of the present invention.

### DETAILED DESCRIPTION

The present invention advantageously provides an apparatus and method for scrambling a message using one or more webpages. Accordingly, the apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

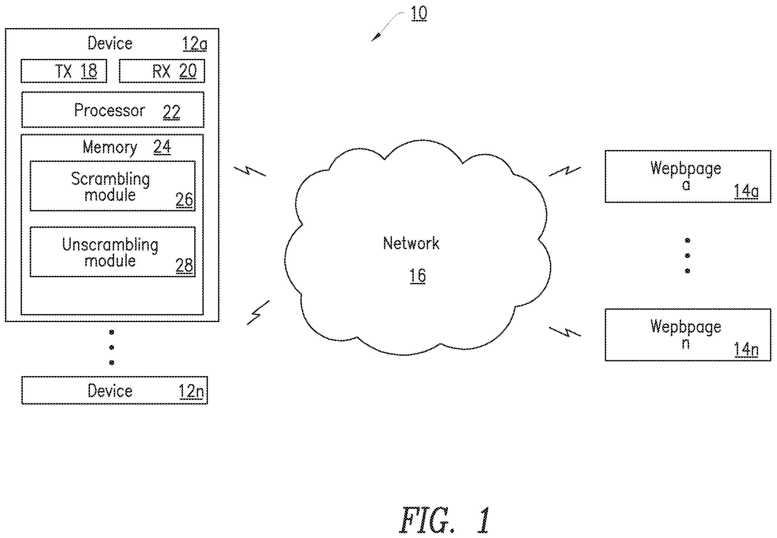

Referring now to drawing figures in which like reference designators refer to like elements there is shown in FIG. 1 an exemplary system for scrambling and unscrambling a message in accordance with the principles of the present invention and designated generally as "10." As used herein, "scrambling" includes one or more forms of encryption based on one or more hashed-webpage as described herein. In other words, hashed web pages are used to generate the "scrambling key". The forms of encryption may include Advanced Encryption Standard Cipher Block Chaining (AES_CBC) encryption, among other encryption operations. The term "message" as used herein may include electronic message(s) and email data but is not limited solely to emails and electronic messages such as text or SMS messages. A "message" may include data that represents information communicated from one party to another. System 10 may include one or more devices 12a-12n (device 12) and one or more webpages 14a-14n (webpage 14) in communication with each other via one or more networks 16.

Each webpage 14 may include respective webpage data, i.e., content, retrieved from one or more servers for display in a web browser that is different from the data or message to be scrambled. Some examples of webpage data include content corresponding to www.CNN.com or a blog from website www.wordpress.com, among a myriad of other content accessible via the world wide web. At least some webpage data associated with at least one webpage 14 may be controllable by user of device 12 such as a blogging site where the user of device 12 can modify at least some webpage data to change webpage 14 content, i.e., user of device 12 can post/remove/modify displayed text, media content and HTML text, among other content associated with webpage 14. In other words, at least some webpage data associated with at least one webpage 14 may be controlled by the sender and/or receiver of the scrambled message. Alternatively or in addition to at least some webpage data being controlled by sender (user of device 12) or receiver of the scrambled message, at least some webpage data of the at least one webpage 14 may not be controlled, i.e., modifiable, by the sender or receiver of the scrambled message. For example, at least some content associated with www.CNN.com may not be modifiable by the user of device 12 such as news story content and/or advertisement content that will change the webpage. In one embodiment, webpage data may include at least one of text of the webpage and HyperText Markup Language, HTML, code of the webpage in which the webpage data does not include advertisement data associated with the at least one webpage.

Network 16 may include communication networks such as wide area networks, local area networks, wireless local area network, long term evolution (LTE) network and the like, among other wired and/or wireless networks. Network 16 provides communications to and from device 12, and provides communications to and from webpage 14, i.e., server(s) hosting webpage 14. Network 16 may be the internet. Device 12 may include one or more transmitters 18 and one or more receivers 20 for communicating with network 16 and one or more webpages 14 associated with one or more website servers. Alternatively, transmitter 18 and receiver 20 functionality may be provided by one or more transceivers. Processor 22 includes one or more central processing units (CPUs) for performing device functions described herein. Device 12 may include memory 24 that stores scrambling module 26 and unscrambling module 28, among other data and modules. Memory 24 may include non-volatile and volatile memory. For example, non-volatile memory may include a hard drive, flash memory, memory stick and the like. Also, volatile memory may include random access memory and others known in the art.

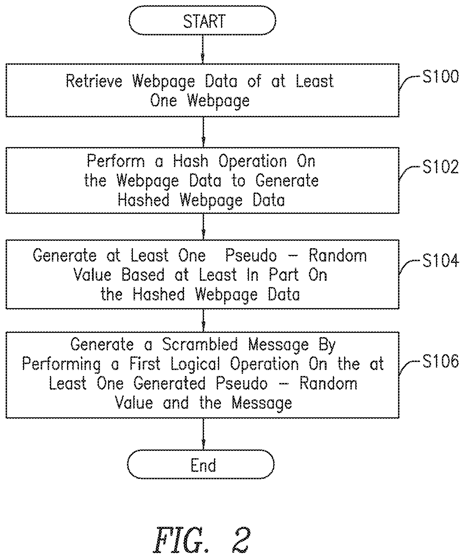

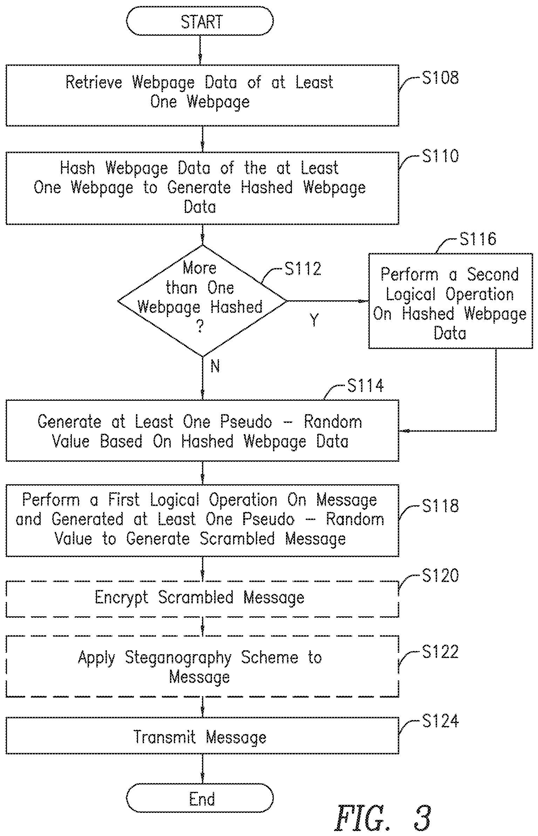

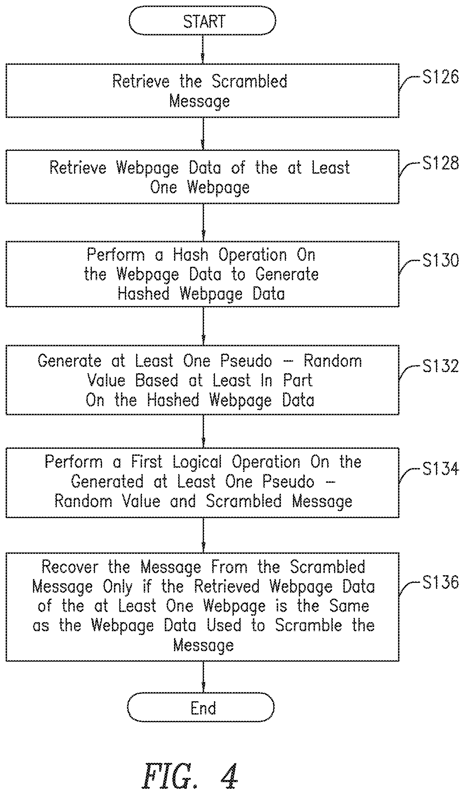

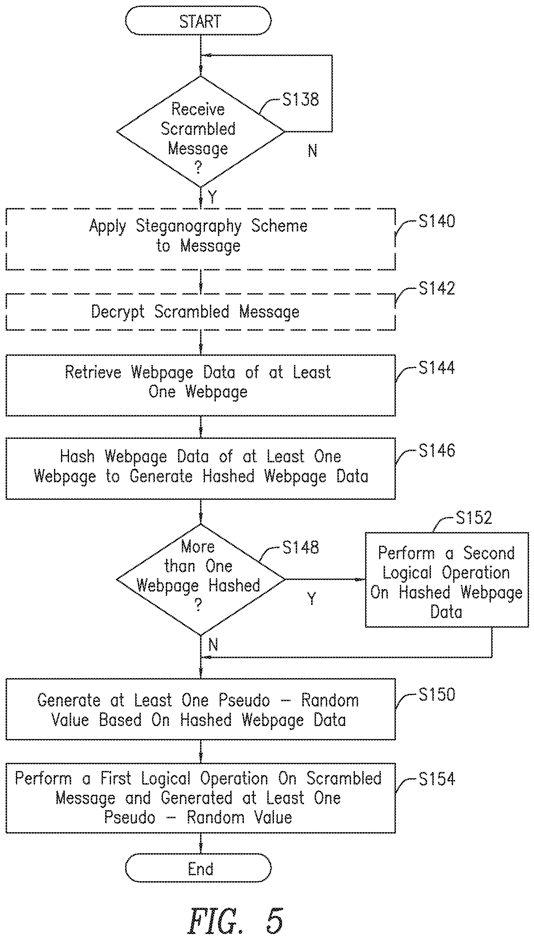

Memory 24 may store program instructions such as those for scrambling module 26 for providing one or more forms of encryption to a message. For example, scrambling module 26 includes instructions, which when executed by processor 22, cause processor 22 to perform the message scrambling process, discussed in detail with reference to FIGS. 2 and 3. Memory 24 may store program instructions for unscrambling module 28 for extracting the scrambled message. For example, unscrambling module 28 includes instructions, which when executed by processor 22, causes processor 22 to perform the unscrambling process, discussed in detail with reference to FIGS. 4 and 5. While device 12 is illustrated having multiple modules, device 12 may include one of modules 26 and 28. For example, one of devices 12 may only send a scrambled message such that only scrambling module 26 is needed. In another example, one of device 12 may only receive the scrambled message such that only the unscrambling module 28 is needed. While modules 26 and 28 are described as being software stored in memory, modules 26 and/or 28 may be hardware based or software-hardware based. Further, the separate programs can be a single program. Device 12 may be a mobile device, tablet, laptop, computer, server and the like, among other devices capable of performing the device 12 functionality described herein.

An exemplary process of scrambling module 26 for scrambling an electronic message is described with reference to FIG. 2. For example, user A of device 12a may want to send user B of device 12b a message (m) such as "This is my very secret message" in which the message is not contained in the one or more selected webpages discussed below. Processor 22, based on executable instructions stored in memory 24, causes webpage data associated with at least one webpage to be retrieved (Block S100). For example, processor 22 may retrieve webpage data from one or more user selected webpages 14. The selected webpages 14 may be in the user's control, e.g., user's blog, not in the user's control, e.g., cnn.com, or may be a mix of user controlled and/or non-user controlled webpages.

Alternatively or in addition to user selection of webpages 14, webpage data from one or more webpages 14 may be automatically selected by device 12. For example, device 22 may store in memory 24 one or more predefined uniform resource locators (URLs) from which to retrieve webpage data. The predefined URLs may be set by a person or entity other than the user of device 12 such as the software provider. In another example, the selection of the one or more webpages 14 from which to retrieve webpage data may be based at least in part on the respective entropy of the one or more webpages. In particular, the entropy of a webpage 14 is a measure of change, i.e., change rate or update rate, that at least a portion of the webpage undergoes over a predefined period of time such that the greater the entropy, the greater the change rate of at least a portion of the retrieved webpage data. For example, the entropy of the CNN webpage and/or a retailer's webpage may be higher than a weekly blogger's webpage as CNN may get updated at least once a day while the blogger's webpage gets updated once a week. Further, the entropy of a webpage is also affected by the extent to which the webpage has been updated. For example, an update for the CNN webpage may modify more webpage data than an update for the blogger's webpage. The entropy of one or more webpages may be determined by device 12 and/or one or more other devices and/or servers, e.g., as number of modified bits per unit of time or in another metric.

The retrieved webpage data may include media content and/or HTML code associated with the selected webpage 14. In one embodiment, processor 22 may remove or ignore retrieved webpage data corresponding to webpage advertisements and/or embedded graphics. In another embodiment, processor 22 may only use core text from the retrieved webpage data such as text associated with a main headline or story on the webpage. It is assumed that the sender and receiver have agreed on some method for selecting which part(s) of webpages 14 to use, or can agree on this over some form of communication channel. After webpage data has been retrieved, processor 22 performs a hashing operation on retrieved webpage data of the at least selected webpage to generate hashed webpage data (Block S102). For example, a respective hashing operation may be performed on retrieved webpage data of CNN.com and USPTO.gov such as to generate hashed webpage data H(CNN.com) and hashed webpage data H(USPTO.gov) where H is a hash function such as SHA-256, among other hash functions known in the art. For clarity, the input to the computation of the hash H (CNN.com) is not the string "CNN.com" but rather the content or webpage data of the associated webpage (or parts thereof) that are being used to scramble (encrypt) a message. One or more hash functions may be used in accordance with the principles of the invention.

Processor 22 generates at least one pseudo-random value based on the hashed webpage data (Block S104). The at least one pseudo-random value may include one or more numbers. For example, the hashed webpage data of one or more webpages 14 may be used as the Seed (S) for the pseudo-random number generator P to generate a "rough" where rough = P(S). The rough or output of the pseudo-random number generator may have the same number of bits as message m, i.e., the content or data to be scrambled. The pseudo-random number generator, P, may be based on Advanced Encryption Standard (AES) or other pseudo-random number generators that are well known in the art. Therefore, the entropy of the rough will be based on whether (all) the selected webpage(s) are known to the prospect eavesdropper and, if they are known, how often the selected webpage(s) change over time. If more than one webpage is hashed, one or more logical operations may be performed on the hashed webpage data in which the output of the one or more logical operation is used as the Seed (S) for the pseudo-random number generator P, as discussed in detail with respect to FIG. 3.

After pseudo-random numbers have been generated based on the hashed webpage data, processor 22 performs a logical operation on the content, e.g., message m, to be scrambled and generated pseudo-random numbers to generate a scrambled message (Block S106). In one embodiment, the logical operation may be an XOR function such that scrambled content or message m' = rough XOR m, where m is the original content and rough = P(Seed), discussed above. One or more other logical operations may be used in Block S106 in accordance with the teachings of the invention. As an example where multiple logical operations are used, processor 22 could produce m' = AES_CBC (Seed, m) or m' = AES_CBC (P(Seed), m), i.e., AES Cipher Block Chaining encryption of message m using Seed as basis for a key.

A detailed scrambling process of FIG. 2 for scrambling a message is described in detail with reference to FIG. 3. For example, user A of device 12a may want to send user B of device 12b a message (m) such as "This is my very secret message" in which the message is not contained in the one or more selected webpages discussed below. Processor 22 causes webpage data associated with at least one webpage to be retrieved, as described above with respect S100 (Block S108). After webpage data has been retrieved, processor 22 performs a hashing operation on retrieved webpage data of the at least selected webpage to generate hashed webpage data, as discussed in detail with respect to S102 (Block S110).

Processor 22 determines if more than one webpage was hashed (Block S112). If the determination is made that only one webpage was hashed in Block S110, processor 22 generates pseudo-random numbers based on the hashed webpage data, as discussed above with respect to S106 (Block S114). Referring back to Block S104, if processor 22 determines more than one webpage has been hashed, processor 22 performs a logical operation on the hashed webpage data (Block S116). In one embodiment, the logical operation may be an XOR function such that the output of the logical operation is H(webpage 14a) XOR H(webpage 14b) XOR....XOR H(webpage 14n) where webpages 14a-14n are selected webpages, i.e., the hashed webpage data is XORed with one another. The output of the logical operation becomes the Seed (S) for Block S114, i.e., rough = P(Seed), where Seed = H(webpage 14a) XOR H(webpage 14b) XOR....XOR H(webpage 14n). The number of hashed webpages may equal the number of selected webpages. One or more other logical operations may be used in Block S116.

After pseudo-random numbers have been generated based on the hashed webpage data, processor 22 performs a logical operation on the content to be scrambled, e.g., message m, and generated pseudo-random numbers to generate a scrambled message, as discussed in detail with respect to S106 (Block S118). The generation of pseudo-random numbers may be based at least in part on an output of the logical operation. In one embodiment, the logical operation may be an XOR function such that scrambled content or message m' = rough XOR m, where m is the original content and rough = P(Seed), discussed above. One or more other logical operations may be used in Block S118 in accordance with the teachings of the invention, e.g., m' = AES_CBC(Seed, m) or some other encryption function including one or more operations on Seed and m may be used as discussed above. If the sender and receiver of the scrambled message share another encryption key, k, processor 22 may perform additional encryption to the scrambled message by performing an encryption process with key k (Block S120). Alternatively, Block S120 may be skipped or omitted from the scrambling process based on design need.

Processor 22 may apply a steganography scheme to the scrambled message (Block S122). For example, processor 22 may apply a steganography crypto function such as text steganography. Steganography refers to hiding or concealing a message within an image or another message. In one embodiment, the steganography scheme may include embedding the scrambled message (m') into a digital image file. Other steganography methods may be used in accordance with the principles of the present invention. Processor 22 causes the message (with or without the additional encryption of Block S120) to be transmitted (Block S124). Alternatively or in addition to transmitting the scrambled message to the receiver, the scrambled message may be posted on a webpage. In one embodiment, the one or more URLs of the one or more selected webpages 14 may be transmitted with the scrambled message. Alternatively, device 12 may automatically post the URLs on a webpage known by the recipient of the scrambled message such that the recipient will be able to unscramble the received message as discussed with respect to FIGS. 4 and 5. Optionally, a checksum of the Seed may also be transmitted, e.g., C = H(Seed) which may be used by the receiver of the scrambled message, as discussed in detail below. The invention is not limited to scrambling of a message, and may scramble other data.

A process of unscrambling module 28 for unscrambling a scrambled message is described with reference to FIG. 4. Processor 22 determines a scrambled message has been received (Block S126). Processor 22 retrieves webpage data of at least one webpage, i.e., at least one selected webpage (Block S128). For example, processor 22 causes webpage data of the one or more selected webpages to be retrieved. Because webpage data from the same selected webpage(s) used in the scrambling process may change over time, processor 22 at receiving device 12 may be retrieving the same or different webpage data than was used during by the transmission device 12 during the scrabbling process. Similar to Block S100, processor 22 may remove or ignore some retrieved webpage data such as webpage advertisements and/or embedded graphics. In another embodiment, processor 22 may only use core text from the retrieved webpage data such as text associated with a main headline or story on the webpage. In other words, processor 22 may be configured to automatically remove or ignore one or more portions of retrieved webpage data such that the same portions of retrieved webpage data are used during the scrambling and descrambling processes, albeit, the webpage data of these portions may or may not have changed from the time it was first retrieved.

Processor 22 hashes webpage data of the at least one webpage to generate hashed webpage data similar to Block S102 (Block S130). For example, a respective hashing operation may be performed on retrieved webpage data of CNN.com and USPTO.gov such as to generate hashed webpage data H(CNN.com) and hashed webpage data H(USPTO.gov) where H is a hash function such as SHA-256, among other hash functions known in the art. The hashed retrieved webpage data at Block S130 may or may not be different from the hashed retrieved webpage data of Block S102 as Block S132 uses webpage data retrieved at a later time (time₂) than a first time (time₁) when webpage data at Block S102 was retrieved (time₂ > time₁).

Processor 22 generates pseudo-random numbers based on the hashed webpage data, as discussed in Block S104 but using webpage data retrieved at a later time, time₂ (Block S132). After processor 22 generates pseudo-random numbers based on the hashed webpage data, processor 22 performs a logical operation on both the scrambled message and generated pseudo-random numbers (Block S134). In one embodiment, the logical operation may be an XOR function such that unscrambled content or message m = rough XOR m', where m is the original content, rough = P(seed) and m' is the scrambled message. One or more other logical operations may be performed in Block S134 in accordance with the teachings of the invention. As mentioned, as an alternative to the above single XOR-operation, an AES_CBC decryption using Seed as the key may be performed. However, the original message will only be recovered if the webpage data, retrieved at time₂ by receiving device 12, is the same as the webpage data that was used by transmission/sender device 12 to generate the scrambled message, i.e., the message is recoverable from the scrambled message only if the same webpage data is retrieved from the at least one webpage. If the sender of the scrambled message included the checksum, C = H(Seed), the receiver may compute its own value for the checksum based on the local value of Seed' obtained, i.e., C' = H(Seed'), and may abort further processing if C is not equal to C', since this indicates at least selected webpage has changed, making further message recovery unfeasible.

In other words, the scrambled message may be considered a self-destroying message in which the message (m) is destroyed after at least one of the selected webpages modified such that the rough, i.e., rough = P(Seed), used to create the message will also be destroyed or is unlikely recoverable. The scrambled messages are automatically destroyed or unrecoverable over time without added effort from the sender of the scrambled message as at least one webpage 14 is automatically modified/updated over time by a third party, thereby changing the rough. One of the selected webpages 14 may correspond to a webpage that is modifiable by the sender and/or receiver such that the sender and/or receiver can change the webpage data of the webpage, thereby destroying the message. If the sender always selects one webpage in the sender's control to be part of the rough, then the sender can destroy all messages that use this particular webpage as part of the rough by modifying the webpage. On the other hand, if the sender selects a webpage 14 in control of the receiver, the receiver may update the controlled webpage after successful descrambling, thereby rendering further recover by an ME infeasible. This may also serve as a message receipt acknowledgement for the sender. After performing one or more logical operations on the generated pseudo-random numbers and scrambled message (m'), processor 22 may recover the message (m) from the scrambled message only if the retrieved webpage data (at Block S128) of the at least one webpage 14 is the same as the webpage data (Block S100) used to scramble the message (Block S136).

A detailed process for unscrambling of FIG. 4 is discussed in detail with respect to FIG. 5. Processor 22 determines whether a scrambled message has been received (Block S138). If processor 22 determines a scrambled message has not been received, processor 22 may repeat or periodically repeat the determination of Block S138. If processor 22 determines a scrambled message has been received, processor 22 may apply a steganography scheme to the received message (Block S140). For example, processor 22 may apply the same type of steganography scheme that was used in Block S122 to extract the scrambled message. Processor 22 may decrypt the message to extract the scrambled message (Block S142). Alternatively, Blocks S140 and/or S142 may be skipped or omitted based on design need or if Blocks S120 and/or S122 were skipped or omitted during the scrambling process. Alternatively, Block S140 may be performed as part of the determination of Block S138 as it may be required to apply a steganography scheme to the received message in order to detect that the scrambled message has been received and/or is available for further processing.

Processor 22 retrieves webpage data of at least one webpage 14, i.e., at least one selected webpage 14 (Block S144). For example, processor 22 causes webpage data of the one or more selected webpages to be retrieved. Because webpage data from the same selected webpage(s) used in the scrambling process may change over time, processor 22 at receiving device 12 may be retrieving the same or different webpage data than was used during by the transmission device 12 during the scrabbling process. Similar to Block S100, processor 22 may remove or ignore some retrieved webpage data such as webpage advertisements and/or embedded graphics. In another embodiment, processor 22 may only use core text from the retrieved webpage data such as text associated with a main headline or story on the webpage. In other words, processor 22 may be configured to automatically remove or ignore one or more portions of retrieved webpage data such that the same portions of retrieved webpage data are used during the scrambling and descrambling processes, albeit, the webpage data of these portions may or may not have changed.

Processor 22 hashes webpage data of the at least one webpage 14 to generate hashed webpage data similar to Block S102 (Block S146). For example, a respective hashing operation may be performed on retrieved webpage data of CNN.com and USPTO.gov such as to generate hashed webpage data H(CNN.com) and hashed webpage data H(USPTO.gov) where H is a hash function such as SHA-256, among other hash functions known in the art, and H(CNN.com) is the hashed content of CNN.com. The hashed retrieved webpage data at Block S146 may or may not be different from the hashed retrieved webpage data of Block S102 as Block S146 uses webpage data retrieved at a later time (time₂) than the time (time₁) when webpage data at Block S102 was retrieved (time₂ > time₁).

Processor 22 determines whether more than one webpage 14 has been hashed as described with respect to Block S104 (Block S148). If the determination is made that only one webpage was hashed in Block S148, processor 22 generates pseudo-random numbers/values based on the hashed webpage data, i.e., based on the hashed webpage, as described with respect to Block S104 (Block S150). Referring back to Block S148, if processor 22 determines more than one webpage has been hashed, processor 22 performs a logical operation on the hashed webpage data, as discussed with respect to Block S108 (Block S152). The logical operation(s) of Block S152 may be the same as the logical operation(s) performed in Block S116.

After performing the logical operation on the hashed webpage data, processor 22 generates pseudo-random numbers based on the hashed webpage data, as discussed with respect to Block S106. In one embodiment, the logical operation may be an XOR function such that the output of the logical operation of Block S152 is H(webpage 14a) XOR H(webpage 14b) XOR....XOR H(webpage 14n). The output of the logical operation becomes the "seed" for Block S150, i.e., rough = P(seed), where seed = H(webpage 14a) XOR H(webpage 14b) XOR....XOR H(webpage 14n) where webpages 14a-14n were selected. The number of hashed webpages may equal the number of selected webpages 14. One or more other logical operations may be used.

After processor 22 generates pseudo-random numbers based on the hashed webpage data, processor 22 performs a logical operation on both the scrambled message and generated pseudo-random numbers (Block S154). In one embodiment, the logical operation may be an XOR function such that unscrambled content or message m = rough XOR m', where m is the original content, rough = P(seed) and m' is the scrambled message. One or more other logical operations may be performed in Block S154. However, the original message will only be recovered if the webpage data, retrieved at a second time (time₂) by receiving device 12, is the same the webpage data that was used by device 12 to generate the scrambled message. In other words, the scrambled message may be considered a self-destroying message in which the message is destroyed after at least one of the selected webpages modified such that the rough, i.e., rough = P(Seed), used to create the message will also be destroyed or unlikely recoverable. The scrambled messages are automatically destroyed or unrecoverable over time without added effort from the sender of the scrambled message because at least one webpage is automatically modified/updated over time by a third party, thereby changing the rough. One of the selected webpages 14 may correspond to a webpage 14 that is modifiable by the sender and/or receiver such that the sender and/or receiver can change the webpage data of the webpage 14, thereby destroying the message. If the sender always selects one webpage in the sender's control to be part of the rough, then the sender and/or receiver can destroy all messages that use this particular webpage as part of the rough by modifying the webpage.

The scrambling process described herein makes the process of unscrambling the message difficult for an eavesdropper. For example, only one webpage may be selected, e.g., CNN.com, for the scrambling process in Block S100 and/or S108. For an eavesdropper to try to retrieve the message, the eavesdropper needs to monitor CNN.com and store all changes the webpage over time in order to be able to generate the same rough that was used to scramble the message. While this may be feasible for an eavesdropper with large resources, if the sender selects multiple, e.g., 10, webpages, the eavesdropper will have a very difficult time tracking all changes to these webpages 14 over time in order to reproduce webpage data from 2 weeks or 4 weeks ago. In one example, the multiple webpages 14 may be from blogs in Wordpress.com, blogs around the worlds or newspapers webpages 14 in Indonesia, and Kenya, among other webpages 14, thereby making tracking of each of these sites over an extended period of time very difficult. Further, selecting a mix of webpages having varying respective entropies, e.g., high entropy, low entropy, etc., helps ensure that the eavesdropper would need to store many millions of webpages 14 scattered all over the web in short time intervals such that the eavesdropper could search back through the stored webpages once the selected webpages become known to the eavesdropper. The eavesdropper is unlikely to be able to continuously make snapshots of the entire WEB over time and keep the snapshots over time, as such a process is extremely resource intensive and costly. One would have to try to unscramble using each page instance if multiple pages are used such as to make the process to unscramble unwieldy for an eavesdropper. Even the intended recipient of the message may be precluded from descrambling the message if the intended recipient waits too long, i.e., the recipient must retrieve webpage data from one or more selected webpages before one of the webpages are changed.

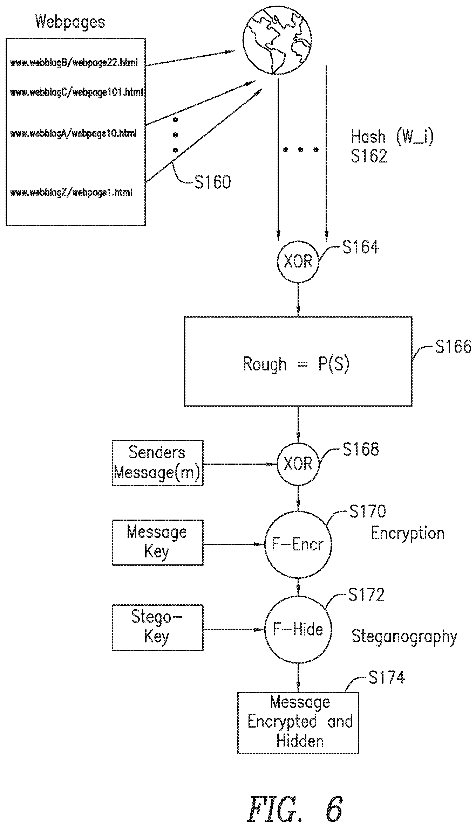

A flow diagram of an embodiment of the scrambling process of FIG. 2 is described with reference to FIG. 6. Webpage data of a plurality of selected webpages 14 is retrieved similar to Block S100 (S160). Each retrieved webpage 14 of the plurality of webpages 14 is hashed (H(W_i)) as described in Block S102 (S162). Processor 22 performs a logical operation, e.g., XOR operation, on the hashed webpage data of each of the plurality of webpages 14 such that the hashed webpage data is XORed with one another to generate a Seed (S) (S164). Processor 22 generates pseudo-random numbers/values, i.e., "rough", based on hashed webpage data such that rough = P(S), where P is the pseudo-random number generator, as discussed above with respect to Block S104 (S166). Processor 22 performs a logical operation on the message m and rough. In one example, message m is XORed with the rough to generate a scrambled message, as discussed in detail with respect to Block S106 (S168). Processor 22 may further encrypt (F-Encr) the scrambled message, as discussed in detail with respect to Block S120 (Block S170). Processor 22 may apply a Steganography scheme to the scrambled message, as discussed in detail with respect to Block S122, thereby generating a scrambled message (S172-S174). The message key may be a stegano-key that is known to both the sender and receiver, k_msg, such that f-hide (rough, message, k_msg) = hidden_message, where f-hide is the steganography function based on the rough, message and k_msg. The hashed webpages may be the hash key. Key management is outside of the scope of this disclosure, and thus will not be discussed herein.

The invention advantageously provides a messaging system between peers with the capability of auto-destroying messages based on third party action even if an eavesdropper manages to acquire the message and keys used to encrypt the message. The invention takes advantage of one or more public webpages that are dynamic and change over time, e.g., www.CNN.com, such that instability is intentionally introduced to the message as the message will not be recoverable unless the same webpage data used to scramble the message is retrieved at a later time during the unscrambling process. In other words, the one or more selected webpages act as entropy sources. Further, the invention advantageously allows the sender to select at least one webpage in the sender's and/or receiver's control, e.g., a blogging webpage, such that the sender and/or receiver can destroy the message at any time by modifying the content of the blogging webpage. Assuming the sender and/or receiver delete the key, i.e., the rough, after it has been used in the descrambling process, then even if the sender and/or receiver are coerced into revealing the webpages for unscrambling the message, as the webpages change over time, the rough will change accordingly, thereby making it impossible even for the sender and/or receiver to reveal to key and thus invalidating/destroying the message. Therefore, an eavesdropper would have to not only know the keys for unscrambling the message but would have be able to retrieve the same webpage data to generate the same rough that was used to scramble the message, in which the webpage data is in the sender's and/or third parties' control from anywhere in the world.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings, which is limited only by the following claims.

## Claims

1. An apparatus (12) for scrambling a message, the apparatus (12) comprising:
a processor (22); and
a memory (24) in communication with the processor (22), the memory (24) containing instructions executable by the processor (22) that are configured to cause the apparatus (12) to:
retrieve webpage data of at least one webpage (14);
perform a hash operation on the webpage data to generate hashed webpage data;
generate at least one pseudo-random value based at least in part on the hashed webpage data;
generate a scrambled message by performing a first logical operation on the at least one generated pseudo-random value and the message, the at least one webpage being automatically modifiable over time by a third party, the modification of the at least one webpage making the scrambled message an unrecoverable message; and
cause the scrambled message to be transmitted.

2. The apparatus (12) of Claim 1, wherein the webpage data includes at least one of text of the webpage (14) and HyperText Markup Language, HTML, code of the webpage (14), the webpage data not including advertisement data associated with the at least one webpage (14).

3. The apparatus (12) of any of Claims 1 and 2, wherein the message is recoverable from the scrambled message only if the same webpage data is retrieved from the at least one webpage (14).

4. The apparatus (12) of any of Claims 1 to 3, wherein the at least one webpage (14) is a plurality of webpages (14), the hashed webpage data being generated for each corresponding webpage (14; S110); and
the memory (24) further contains instructions executable by the processor (22) that are configured to perform a second logical operation on the hashed webpage data of the plurality of webpages (14; S116), the generation of that at least one pseudo-random value being based at least in part on an output of the second logical operation.

5. The apparatus (12) of Claim 4, wherein the second logical operation is one of:
an XOR operation, the hashed webpage data for each of the plurality of webpages being XORed with one another (S164); and
a hash function that is performed using the hashed webpage data as an input (S164).

6. The apparatus (12) of any of Claims 1 to 5, wherein the first logical operation is an encryption function using the generated pseudo-random value as basis for a key (S168).

7. The apparatus (12) of any of Claims 1 to 6, wherein the memory (24) further contains instructions executable by the processor (22) that are configured to apply a steganography scheme to the scrambled message (S122; S172).

8. A method for scrambling a message, the method comprising:
retrieving webpage data of at least one webpage (S100; S108);
performing a hash operation on the webpage data to generate hashed webpage data (S102; S110);
generating at least one pseudo-random value based at least in part on the hashed webpage data (S104; 114);
generating a scrambled message by performing a first logical operation on the at least one pseudo-random value and the message (S106; 118), the at least one webpage being automatically modifiable over time by
a third party, the modification of the at least one webpage making the scrambled message an unrecoverable message; and
causing the scrambled message to be transmitted (S124).

9. An apparatus (12) for unscrambling a scrambled message, the scrambled message including a message that was scrambled based at least in part on webpage data of at least one webpage retrieved, the apparatus (12) comprising:
a processor (22); and
a memory (24) in communication with the processor (22), the memory (24) containing instructions executable by the processor (22) that are configured to cause the apparatus (12) to:
receive the scrambled message;
retrieve webpage data of the at least one webpage (14);
perform a hash operation on the webpage data to generate hashed webpage data;
generate at least one pseudo-random value based at least in part on the hashed webpage data;
perform a first logical operation on the at least one pseudo-random value and the scrambled message; and
recover the message from the scrambled message, the message being recoverable from the scrambled message only if the retrieved webpage data of the at least one webpage (14) is the same as the webpage data used to scramble the message, the at least one webpage being automatically modifiable over time by a third party, the modification of the at least one webpage making the scrambled message an unrecoverable message.

10. The apparatus (12) of Claim 9, wherein the webpage data includes at least one of text of the webpage (14) and HyperText Markup Language, HTML, code of the webpage (14), the webpage (14) data not including advertisement data associated with the at least one webpage (14).

11. The apparatus (12) of any of Claims 9 and 10, wherein the at least one webpage (14) is a plurality of webpages (14), the hashed webpage data being generated for each corresponding webpage (14); and
the memory (24) further contains instructions executable by the processor (22) that are configured to perform a second logical operation on the hashed webpage data of the plurality of webpages (14), the generation of the at least one pseudo-random value being based at least in part on the output of the second logical operation.

12. The apparatus (12) of Claim 11, wherein the second logical operation is an XOR operation, the hashed webpage data for each of the plurality of webpages being XORed with one another (S150).

13. The apparatus (12) of any of Claims 9 to 12, wherein the first logical operation is a decryption function using the generated pseudo-random value as basis for a key.

14. A method for unscrambling a scrambled message, the scrambled message including a message that was scrambled based at least in part on webpage data of at least one webpage retrieved, the method comprising:
receiving the scrambled message (S126);
retrieving webpage data of the at least one webpage (14; S128);
performing a hash operation on the webpage data to generate hashed webpage data (S130);
generating at least one pseudo-random value based at least in part on the hashed webpage data (S132);
performing a first logical operation on the at least one pseudo-random value and the scrambled message (S134); and
recovering the message from the scrambled message, the message being recoverable from the scrambled message only if the retrieved webpage data of the at least one webpage (14) is the same as the webpage data used to scramble the message (S136), the at least one webpage being automatically modifiable over time by a third party, the modification of the at least one webpage making the scrambled message an unrecoverable message.

15. A non-volatile computer-readable memory (24) storing instructions which, when executed by a processor (22), cause the processor (22) to perform the method of Claim 8 or the method of Claim 14.

## Patentansprüche

1. Vorrichtung (12) zum Verwürfeln einer Nachricht, wobei die Vorrichtung (12) umfasst:
einen Prozessor (22); und
einen Speicher (24) in Kommunikation mit dem Prozessor (22), wobei der Speicher (24) Anweisungen enthält, die vom Prozessor (22) ausgeführt werden können und konfiguriert sind, um die Vorrichtung (12) zu veranlassen zum:
Abrufen von Webseitendaten mindestens einer Webseite (14) ;
Durchführen einer Hash-Operation an den Webseitendaten, um Hash-codierte Webseitendaten zu generieren;
Generieren mindestens eines Pseudozufallswerts wenigstens zum Teil basierend auf den Hash-codierten Webseitendaten;
Generieren einer verwürfelten Nachricht durch Durchführen einer ersten logischen Operation an dem mindestens einen generierten Pseudozufallswert und der Nachricht, wobei die mindestens eine Webseite mit der Zeit durch einen Dritten automatisch modifiziert werden kann, wobei die Modifikation der mindestens einen Webseite die verwürfelte Nachricht zu einer nicht wiederherstellbaren Nachricht macht; und
Veranlassen, dass die verwürfelte Nachricht gesendet wird.

2. Vorrichtung (12) nach Anspruch 1, wobei die Webseitendaten mindestens einen von Text der Webseite (14) und Hypertext Markup Language-,HTML-,Code der Webseite (14) umfassen, wobei die Webseitendaten keine Werbedaten umfassen, die mit der mindestens einen Webseite (14) assoziiert sind.

3. Vorrichtung (12) nach einem der Ansprüche 1 und 2, wobei die Nachricht nur dann aus der verwürfelten Nachricht wiederhergestellt werden kann, wenn die gleichen Webseitendaten von der mindestens einen Webseite (14) abgerufen werden.

4. Vorrichtung (12) nach einem der Ansprüche 1 bis 3, wobei es sich bei der mindestens einen Webseite (14) um eine Mehrzahl von Webseiten (14) handelt, die Hash-codierten Webseitendaten für jede entsprechende Webseite (14; S110) generiert werden; und
der Speicher (24) ferner Anweisungen enthält, die vom Prozessor (22) ausgeführt werden können und zum Durchführen einer zweiten logischen Operation an den Hash-codierten Webseitendaten der Mehrzahl von Webseiten (14; S116) konfiguriert sind, wobei die Generierung des mindestens einen Pseudozufallswerts wenigstens zum Teil auf einer Ausgabe der logischen Operation basiert.

5. Vorrichtung (12) nach Anspruch 4, wobei die zweite logische Operation eine ist von:
einer Exklusiv-ODER-Operation, wobei die Hash-codierten Webseitendaten für jede der Mehrzahl von Webseiten miteinander exklusiv ODERiert werden (S164); und
einer Hash-Funktion, die unter Verwendung der Hash-codierten Webseitendaten als eine Eingabe ausgeführt wird (S164).

6. Vorrichtung (12) nach einem der Ansprüche 1 bis 5, wobei die erste logische Operation eine Verschlüsselungsfunktion ist, die den generierten Pseudozufallswert als Basis für einen Schlüssel verwendet (S168).

7. Vorrichtung (12) nach einem der Ansprüche 1 bis 6, wobei der Speicher (24) ferner Anweisungen enthält, die vom Prozessor (22) ausgeführt werden können und zum Anwenden eines Steganographieschemas auf die verwürfelte Nachricht konfiguriert sind (S122; S172).

8. Verfahren zur Verwürfelung einer Nachricht, wobei das Verfahren umfasst:
Abrufen von Webseitendaten mindestens einer Webseite (S100; S108);
Durchführen einer Hash-Operation an den Webseitendaten, um Hash-codierte Webseitendaten zu generieren (S102; S110);
Generieren mindestens eines Pseudozufallswerts wenigstens zum Teil basierend auf den Hash-codierten Webseitendaten (S104; 114);
Generieren einer verwürfelten Nachricht durch Durchführen einer ersten logischen Operation an dem mindestens einen Pseudozufallswert und der Nachricht (S106; 118), wobei die mindestens eine Webseite mit der Zeit durch einen Dritten automatisch modifiziert werden kann, wobei die Modifikation der mindestens einen Webseite die verwürfelte Nachricht zu einer nicht wiederherstellbaren Nachricht macht; und
Veranlassen, dass die verwürfelte Nachricht gesendet wird (S124).

9. Vorrichtung (12) zum Entwürfeln einer verwürfelten Nachricht, wobei die verwürfelte Nachricht eine Nachricht umfasst, die wenigstens zum Teil basierend auf abgerufenen Webseitendaten mindestens einer Webseite verwürfelt wurde, wobei die Vorrichtung (12) umfasst:
einen Prozessor (22); und
einen Speicher (24) in Kommunikation mit dem Prozessor (22), wobei der Speicher (24) Anweisungen enthält, die vom Prozessor (22) ausgeführt werden können und konfiguriert sind, um die Vorrichtung (12) zu veranlassen zum:
Empfangen der verwürfelten Nachricht;
Abrufen von Webseitendaten der mindestens einen Webseite (14);
Durchführen einer Hash-Operation an den Webseitendaten, um Hash-codierte Webseitendaten zu generieren;
Generieren mindestens eines Pseudozufallswerts wenigstens zum Teil basierend auf den Hash-codierten Webseitendaten;
Durchführen einer ersten logischen Operation an dem mindestens einen Pseudozufallswert und der verwürfelten Nachricht; und
Wiederherstellen der Nachricht aus der verwürfelten Nachricht, wobei die Nachricht nur dann aus der verwürfelten Nachricht wiederhergestellt werden kann, wenn die abgerufenen Webseitendaten der mindestens einen Webseite (14) gleich wie die zum Verwürfeln der Nachricht verwendeten Webseitendaten sind, wobei die mindestens eine Webseite mit der Zeit durch einen Dritten automatisch modifiziert werden kann, wobei die Modifikation der mindestens einen Webseite die verwürfelte Nachricht zu einer nicht wiederherstellbaren Nachricht macht.

10. Vorrichtung (12) nach Anspruch 9, wobei die Webseitendaten mindestens einen von Text der Webseite (14) und Hypertext Markup Language-,HTML-,Code der Webseite (14) umfassen, wobei die Daten der Webseite (14) keine Werbedaten umfassen, die mit der mindestens einen Webseite (14) assoziiert sind.

11. Vorrichtung (12) nach einem der Ansprüche 9 und 10, wobei es sich bei der mindestens einen Webseite (14) um eine Mehrzahl von Webseiten (14) handelt, die Hash-codierten Webseitendaten für jede entsprechende Webseite (14) generiert werden; und
der Speicher (24) ferner Anweisungen enthält, die vom Prozessor (22) ausgeführt werden können und zum Durchführen einer zweiten logischen Operation an den Hash-codierten Webseitendaten der Mehrzahl von Webseiten (14) konfiguriert sind, wobei die Generierung des mindestens einen Pseudozufallswerts wenigstens zum Teil auf einer Ausgabe der logischen Operation basiert.

12. Vorrichtung (12) nach Anspruch 11, wobei die zweite logische Operation eine Exklusiv-ODER-Operation ist, wobei die Hash-codierten Webseitendaten für jede der Mehrzahl von Webseiten miteinander exklusiv ODERiert werden (S150).

13. Vorrichtung (12) nach einem der Ansprüche 9 bis 12, wobei die erste logische Operation eine Verschlüsselungsfunktion ist, die den generierten Pseudozufallswert als Basis für einen Schlüssel verwendet.

14. Verfahren zur Entwürfelung einer verwürfelten Nachricht, wobei die verwürfelte Nachricht eine Nachricht umfasst, die wenigstens zum Teil basierend auf abgerufenen Webseitendaten mindestens einer Webseite verwürfelt wurde, wobei das Verfahren umfasst:
Empfangen der verwürfelten Nachricht (S126);
Abrufen von Webseitendaten der mindestens einen Webseite (14; S128);
Durchführen einer Hash-Operation an den Webseitendaten, um Hash-codierte Webseitendaten zu generieren (S130);
Generieren mindestens eines Pseudozufallswerts wenigstens zum Teil basierend auf den Hash-codierten Webseitendaten (S132);
Durchführen einer ersten logischen Operation an dem mindestens einen Pseudozufallswert und der verwürfelten Nachricht (S134); und
Wiederherstellen der Nachricht aus der verwürfelten Nachricht, wobei die Nachricht nur dann aus der verwürfelten Nachricht wiederhergestellt werden kann, wenn die abgerufenen Webseitendaten der mindestens einen Webseite (14) gleich wie die zum Verwürfeln der Nachricht verwendeten Webseitendaten sind (S136), wobei die mindestens eine Webseite mit der Zeit durch einen Dritten automatisch modifiziert werden kann, wobei die Modifikation der mindestens einen Webseite die verwürfelte Nachricht zu einer nicht wiederherstellbaren Nachricht macht.

15. Nicht-flüchtiger computerlesbarer Speicher (24), der Anweisungen speichert, die bei Ausführung durch einen Prozessor (22) den Prozessor (22) zum Durchführen des Verfahrens nach Anspruch 8 oder des Verfahrens nach Anspruch 14 veranlassen.

## Revendications

1. Appareil (12) de brouillage d'un message, l'appareil (12) comprenant :
un processeur (22) ; et
une mémoire (24) en communication avec le processeur (22), la mémoire (24) contenant des instructions exécutables par le processeur (22) qui sont configurées pour amener l'appareil (12) à :
récupérer des données de page Web d'au moins une page Web (14) ;
réaliser une opération de hachage sur les données de page Web pour générer des données de page Web hachées ;
générer au moins une valeur pseudo-aléatoire sur la base au moins en partie des données de page Web hachées ;
générer un message brouillé par la réalisation d'une première opération logique sur l'au moins une valeur pseudo-aléatoire générée et le message, l'au moins une page Web étant automatiquement modifiable au fil du temps par un tiers, la modification de l'au moins une page Web faisant du message brouillé un message irrécupérable ; et
amener le message brouillé à être transmis.

2. Appareil (12) selon la revendication 1, dans lequel les données de page Web incluent au moins l'un parmi un texte de la page Web (14) et un code de langage de balisage hypertexte, HTML, de la page Web (14), les données de page Web n'incluant pas de données d'annonce associées à l'au moins une page Web (14).

3. Appareil (12) selon l'une quelconque des revendications 1 et 2, dans lequel le message est récupérable depuis le message brouillé uniquement si les mêmes données de page Web sont récupérées depuis l'au moins une page Web (14) .

4. Appareil (12) selon l'une quelconque des revendications 1 à 3, dans lequel l'au moins une page Web (14) est une pluralité de pages Web (14), les données de page Web hachées étant générées pour chaque page Web correspondante (14 ; S110) ; et
la mémoire (24) contient en outre des instructions exécutables par le processeur (22) qui sont configurées pour réaliser une deuxième opération logique sur les données de page Web hachées de la pluralité de pages Web (14 ; S116), la génération de cette au moins une valeur pseudo-aléatoire étant basée au moins en partie sur une sortie de la deuxième opération logique.

5. Appareil (12) selon la revendication 4, dans lequel la deuxième opération logique est l'une parmi :
une opération XOR, les données de page Web hachées pour chacune de la pluralité de pages Web étant soumises à l'opération XOR l'une avec l'autre (S164) ; et
une fonction de hachage qui est réalisée en utilisant les données de page Web hachées en tant qu'une entrée (S164).

6. Appareil (12) selon l'une quelconque des revendications 1 à 5, dans lequel la première opération logique est une fonction de chiffrement utilisant la valeur pseudo-aléatoire générée en tant que base pour une clé (S168).

7. Appareil (12) selon l'une quelconque des revendications 1 à 6, dans lequel la mémoire (24) contient en outre des instructions exécutables par le processeur (22) qui sont configurées pour appliquer un schéma de stéganographie au message brouillé (S122 ; S172).

8. Procédé de brouillage d'un message, le procédé comprenant :
la récupération de données de page Web d'au moins une page Web (S100 ; S108) ;
la réalisation d'une opération de hachage sur les données de page Web pour générer des données de page Web hachées (S102 ; S110) ;
la génération d'au moins une valeur pseudo-aléatoire sur la base au moins en partie des données de page Web hachées (S104 ; 114) ;
la génération d'un message brouillé par la réalisation d'une première opération logique sur l'au moins une valeur pseudo-aléatoire et le message (S106 ; 118), l'au moins une page Web étant automatiquement modifiable au fil du temps par un tiers, la modification de l'au moins une page Web faisant du message brouillé un message irrécupérable ; et
le fait d'amener le message brouillé à être transmis (S124).

9. Appareil (12) de débrouillage d'un message brouillé, le message brouillé incluant un message qui a été brouillé sur la base au moins en partie des données de page Web d'au moins une page Web récupérée, l'appareil (12) comprenant :
un processeur (22) ; et
une mémoire (24) en communication avec le processeur (22), la mémoire (24) contenant des instructions exécutables par le processeur (22) qui sont configurées pour amener l'appareil (12) à :
recevoir le message brouillé ;
récupérer des données de page Web de l'au moins une page Web (14) ;
réaliser une opération de hachage sur les données de page Web pour générer des données de page Web hachées ;
générer au moins une valeur pseudo-aléatoire sur la base au moins en partie des données de page Web hachées ;
réaliser une première opération logique sur l'au moins une valeur pseudo-aléatoire et le message brouillé ; et
récupérer le message depuis le message brouillé, le message étant récupérable depuis le message brouillé uniquement si les données de page Web récupérées depuis l'au moins une page Web (14) sont les mêmes que les données de page Web utilisées pour brouiller le message, l'au moins une page Web étant automatiquement modifiable au fil du temps par un tiers, la modification de l'au moins une page Web faisant du message brouillé un message irrécupérable.

10. Appareil (12) selon la revendication 9, dans lequel les données de page Web incluent au moins l'un parmi un texte de la page Web (14) et un code de langage de balisage hypertexte, HTML, de la page Web (14), les données de page Web (14) n'incluant pas de données d'annonce associées à l'au moins une page Web (14).

11. Appareil (12) selon l'une quelconque des revendications 9 et 10, dans lequel l'au moins une page Web (14) est une pluralité de pages Web (14), les données de page Web hachées étant générées pour chaque page Web correspondante (14) ; et
la mémoire (24) contient en outre des instructions exécutables par le processeur (22) qui sont configurées pour réaliser une deuxième opération logique sur les données de page Web hachées de la pluralité de pages Web (14), la génération de l'au moins une valeur pseudo-aléatoire étant basée au moins en partie sur une sortie de la deuxième opération logique.

12. Appareil (12) selon la revendication 11, dans lequel la deuxième opération logique est une opération XOR, les données de page Web hachées pour chacune de la pluralité de pages Web étant soumises à l'opération XOR l'une avec l'autre (S150).

13. Appareil (12) selon l'une quelconque des revendications 9 à 12, dans lequel la première opération logique est une fonction de déchiffrement utilisant la valeur pseudo-aléatoire générée en tant que base pour une clé.

14. Procédé de débrouillage d'un message brouillé, le message brouillé incluant un message qui a été brouillé sur la base au moins en partie de données de page Web d'au moins une page Web récupérée, le procédé comprenant :
la réception du message brouillé (S126) ;
la récupération de données de page Web d'au moins une page Web (14 ; S128) ;
la réalisation d'une opération de hachage sur les données de page Web pour générer des données de page Web hachées (S130) ;
la génération d'au moins une valeur pseudo-aléatoire sur la base au moins en partie des données de page Web hachées (S132) ;
la réalisation d'une première opération logique sur l'au moins une valeur pseudo-aléatoire et le message brouillé (S134) ; et
la récupération du message depuis le message brouillé, le message étant récupérable depuis le message brouillé uniquement si les données de page Web récupérées depuis l'au moins une page Web (14) sont les mêmes que les données de page Web utilisées pour brouiller le message (S136), l'au moins une page Web étant automatiquement modifiable au fil du temps par un tiers, la modification de l'au moins une page Web faisant du message brouillé un message irrécupérable.

15. Mémoire lisible par ordinateur non volatile (24) stockant des instructions qui, lorsqu'elles sont exécutées par un processeur (22), amènent le processeur (22) à réaliser le procédé selon la revendication 8 ou le procédé selon la revendication 14.
